# EUROPÄISCHE PATENTSCHRIFT

(11) **EP 3 982 455 B1**
(45) Veröffentlichungstag und Bekanntmachung des Hinweises auf die Patenterteilung: **13.09.2023**
(21) Anmeldenummer: 21201490.6
(22) Anmeldetag: 07.10.2021
(51) Int. Cl.: H01M 10/42, H01M 10/48, G01R 31/00

(54) **BATTERIEZELLE ZUR DURCHFÜHRUNG EINES SICHERHEITSTESTES**
BATTERY CELL FOR CARRYING OUT A SECURITY TEST
ÉLÉMENT DE BATTERIE DESTINÉE À LA MISE EN OEUVRE D'UN ESSAI DE SÉCURITÉ

(30) Priorität: 07.10.2020 DE 102020126305
(43) Veröffentlichungstag der Anmeldung: 13.04.2022
(73) Patentinhaber: Volkswagen Aktiengesellschaft, 38440 Wolfsburg (DE)
(72) Erfinder: Jahnke, Hannes, 38114 Braunschweig (DE); Nolte, Oliver, 38116 Braunschweig (DE)
(74) Vertreter: Bals & Vogel Patentanwälte PartGmbB

(56) Entgegenhaltungen:
- WO-A1-2013/146596
- CN-A- 108 134 126
- CN-A- 108 828 384
- CN-U- 211 017 281
- US-A1- 2018 120 381

## Beschreibung

Die vorliegende Erfindung betrifft eine Batteriezelle, ein System sowie ein Verfahren zur Durchführung eines Sicherheitstestes.

Mit der steigenden Akzeptanz von Elektromobilität wächst auch der Anspruch an die Sicherheit von Batteriezellen als Energiequelle für die Elektromobilität. Eine Gefahr geht hierbei von Kurzschlüssen innerhalb von Batteriezellen aus, die dazu führen, dass nicht nur die einzelnen Batteriezellen, sondern ganze Batteriemodule Schaden nehmen. Ursache für solche Kurzschlüsse ist zum Beispiel eine bei Ladephasen lokal vorkommende Überladung der Batteriezellen. Dies führt beispielsweise in Lithium-Ionen-Akkus dazu, dass sich elementares Lithium an der Anode anlagert und so genannte Dendriten wachsen. Die Dendriten können die Separatorschicht zwischen einer Anode und einer angrenzenden Kathode durchbohren und schließlich den Kontakt zwischen Anode und Kathode herstellen, was einen Kurzschluss verursacht. Die beim Kurzschluss entstehende Hitze kann u.a. den brennbaren Elektrolyten entzünden, was sich auf benachbarte Zellen und letztlich das ganze Batteriemodul ausbreiten kann.

Um die Sicherheit von Batteriezellen zu erhöhen, sind aus dem Stand der Technik verschiedene Ansätze bekannt. So schlägt das Dokument US 2018/0198132 A1 beispielsweise die Einführung eines Stromabnehmers in eine Batteriezelle bzw. eine Batterie vor, mit deren Hilfe es möglich ist, einen Kurzschlusswiderstand bei einem Kurzschluss im Falle einer anormalen Situation stark zu erhöhen und den Kurzschlussstrom somit stark zu verringern, so dass die durch den Kurzschluss erzeugte Wärme stark abnimmt und die Sicherheitsleistung der Batterie verbessert wird.

Diese bekannten Sicherheitsmechanismen schützen allerdings nur, wenn ein Kurzschluss innerhalb einer Batteriezelle schnell genug erkannt wird. Um die mögliche Gefahr von Kurzschlüssen besser einschätzen und vorhersagen zu können, ist bis heute nachteiliger Weise noch zu wenig über die zu Kurzschlüssen führenden Zellprozesse innerhalb von Batteriezellen bekannt. Daher ist es zur Erhöhung der Sicherheit erforderlich, das Kurzschlussverhalten von Batteriezellen genauer zu untersuchen.

Hierzu sind aus dem Stand der Technik - beispielsweise aus der US 2018/0123166 A1 oder der US 2018/120381 A1-verschiedene Methoden bekannt, in denen bewusst Kurzschlüsse innerhalb von Batteriezellen induziert werden, um das Verhalten der Zellen in diesen Situationen zu untersuchen und somit weiterführende Kenntnisse über das Kurzschlussverhalten von Batteriezellen zu erhalten. In solchen Sicherheitstests werden Batteriezellen im Labor beispielsweise über das gewaltsame Eindringen eines elektrisch leitfähigen Nagels, über eine Zelldeformation, über eine Überhitzung, über einen externen Kurzschluss, über das Einbringen von hochenergetischer Laserstrahlung bzw. schmelzfähiger Legierungen und Wachse oder über das Einbringen von Fremdpartikeln zu der Erzeugung von Kurzschlüssen angeregt. Die induzierten Kurzschlüsse werden dabei vorzugsweise in Abhängigkeit einer Vielzahl weiterer veränderlicher Parameter durchgeführt und können auf diese Weise zum besseren Verständnis des Kurzschlussverhaltens von Batteriezellen beitragen. Ein Nachteil an den bekannten Methoden ist allerdings, dass bei diesen Lösungen Material in die Zelle eingebracht wird, Aktivmaterial aus den Zellen entfernt wird oder die Zellen geöffnet werden müssen, sodass sich der Zustand der Batteriezellen bei der künstlichen Initiierung eines Kurzschlusses signifikant vom natürlichen Zellzustand der Batteriezellen unterscheidet. Dies reduziert wiederum die Aussagekraft der Sicherheitstests.

Es ist daher die Aufgabe der vorliegenden Erfindung, die voranstehend beschriebenen Nachteile zumindest teilweise zu beheben, insbesondere ist es die Aufgabe der vorliegenden Erfindung, eine Batteriezelle für den Einsatz in einem Sicherheitstest vorzuschlagen, die konstruktiv einfach und kostengünstig herstellbar ist und in Sicherheitstests insbesondere möglichst aussagekräftige Informationen in Bezug auf das natürliche Zellverhalten von Batteriezellen liefert.

Die voranstehende Aufgabe wird gelöst durch eine Batteriezelle mit den Merkmalen des Anspruchs 1, ein System gemäß Anspruch 9 sowie ein Verfahren gemäß Anspruch 10. Weitere Merkmale und Details ergeben sich aus den Unteransprüchen, der Beschreibung und den Zeichnungen. Technische Merkmale, die zu der erfindungsgemäßen Batteriezelle offenbart werden, gelten dabei auch in Verbindung mit dem erfindungsgemäßen System bzw. dem erfindungsgemäßen Verfahren und umgekehrt, sodass bezüglich der Offenbarung zu den einzelnen Erfindungsaspekten stets wechselseitig Bezug genommen wird bzw. werden kann. Zweckmäßige Ausgestaltungen der Erfindung sind in den abhängigen Ansprüchen ausgeführt.

Die erfindungsgemäße Batteriezelle zur Durchführung eines Sicherheitstestes umfasst hierbei eine Mehrzahl von schichtförmig ausgebildeten Anoden, eine Mehrzahl von schichtförmig ausgebildeten Kathoden und eine Mehrzahl von Separatorschichten zur elektrischen Isolation der Anoden und der Kathoden, wobei die Anoden einen zentral angeordneten Anodenableiter sowie eine beidseitig an den Anodenableiter angeordnete Beschichtung mit Anodenaktivmaterial aufweisen und die Kathoden einen zentral angeordneten Kathodenableiter sowie eine beidseitig an den Kathodenableiter angeordnete Beschichtung mit Kathodenaktivmaterial aufweisen. Erfindungsgemäß ist zudem zumindest ein Paar aus einer ersten und zweiten einseitig beschichteten Anode und/oder ein Paar aus einer ersten und zweiten einseitig beschichteten Kathode vorgesehen, wobei das Paar aus einer ersten und zweiten einseitig beschichteten Anode und/oder das Paar aus einer ersten und zweiten einseitig beschichteten Kathode jeweils derart über ihre unbeschichteten Seiten benachbart zueinander angeordnet sind, dass zwischen den benachbarten aneinander angrenzenden unbeschichteten Seiten der Anode und/oder der Kathode ein Spalt zur Einführung eines Initiierungselementes zur Initiierung eines Kurzschlusses zwischen den einseitig beschichteten Anoden und/oder Kathoden und einer angrenzenden beidseitig beschichteten Anode und/oder Kathode gebildet ist. Es versteht sich, dass neben dem erfindungsgemäß vorgesehenen Paar aus einer ersten und zweiten einseitig beschichteten Anode und/oder dem Paar einer ersten und zweiten einseitig beschichteten Kathode zusätzlich einzelne einseitig beschichtete Anoden und/oder Kathoden in der erfindungsgemäßen Batteriezelle angeordnet sein können. Diese können dann insbesondere am Rand bzw. bei einem gewickelten Zellstapel mittig angeordnet sein, da die äußersten Schichten einer erfindungsgemäßen Batteriezelle bspw. dann nicht mehr beidseitig, sondern nur einseitig beschichtet sind.

Die gegenständliche Batteriezelle ist hierbei insbesondere in Form einer Lithium-Ionen-Batteriezelle gebildet, wie sie heute für den Einsatz in Smart-Phones, Laptops, Elektro- oder Hybridfahrzeugen vorgesehen ist. Ebenso ist es allerdings denkbar, dass die gegenständliche Batteriezelle in Form einer Natrium-Ionen-Zelle, einer Magnesium-Ionen-Zelle oder einer Zink-, einer Aluminium- oder einer anderen Metalloxidbatterie gebildet ist, bei der ein Kurzschluss zwischen der Anode und der Kathode der Zelle durch Dendritenwachstum auftreten kann. Vorzugsweise kann die Batteriezelle als Pouch-Zelle ausgebildet sein.

Unter einer schichtförmig ausgebildeten Anode bzw. einer schichtförmig ausgebildeten Kathode kann im Rahmen der Erfindung insbesondere eine flächenhaft ausgebreitete Masse eines Anoden- bzw. Kathodenmaterials verstanden werden, bei der die Schichtdicke geringer ist, als die Schichtbreite. Eine beidseitig beschichtete Anode oder Kathode ist hierbei auf beiden Seiten eines Anoden- bzw. Kathodenableiters mit Aktivmaterial beschichtet, wohingegen eine einseitig beschichtete Anode oder Kathode entsprechend nur auf einer Seite beschichtet ist.

Die gegenständlichen Separatorschichten zur elektrischen Isolation der Anode und/oder der Kathode können vorzugsweise aus mikroporösen Polymeren, insbesondere aus mikroporösen Polymermembranen gebildet und beispielsweise mehrlagig ausgeführt sein. Ebenso können die Separatorschichten aus feinen, vorzugsweise keramisch beschichteten Vliesstoffen gebildet sein, die nicht nur eine hohe Flexibilität, sondern auch eine hohe Temperaturbeständigkeit bieten und somit eine größere Sicherheit vor thermisch bedingtem Durchgehen einer Zelle aufweisen. Ebenso kann es bspw. im Rahmen der Ausbildung einer Batteriezelle als Feststoffzelle vorgesehen sein, dass Keramiken, Polymere oder Sulfide zwischen den Anoden- und Kathodenschichten angeordnet sind und die "Separatorschichten" bilden.

Im Hinblick auf eine möglichst schnelle und kontrollierte Erzeugung eines Kurzschlusses zwischen einer erfindungsgemäß ausgeführten einseitig beschichteten Elektrode und einer benachbart angeordneten beidseitig beschichteten Elektrode kann das Paar aus einseitig beschichteten Elektroden insbesondere als Paar aus einseitig beschichteten Anoden gebildet sein.

Im Hinblick auf eine effiziente Aufnahme und Ableitung von Elektronen kann erfindungsgemäß insbesondere vorgesehen sein, dass der Anodenableiter und/oder der Kathodenableiter aus einer Metallplatte gebildet ist, wobei die Metallplatte vorzugsweise im Wesentlichen planparallel zu den an der Anode und/oder der Kathode angrenzenden Separatorschichten angeordnet ist. Vorteilhafterweise kann das Anodenableiterelement hierbei aus einem Kupferwerkstoff und/oder das Kathodenableiterelement aus einem Aluminiumwerkstoff gebildet sein. Eine gegenständliche Metallplatte kann hierbei insbesondere in Form einer Ableiter- oder Metallfolie ausgebildet sein. Ebenso sind poröse Ableiter, wie beispielsweise Gitterstrukturen oder dergleichen vorstellbar.

Im Rahmen der Erfindung ist erkannt worden, dass durch die erfindungsgemäße Ausgestaltung der gegenständlichen Batteriezelle Kurzschlüsse initiiert werden können, ohne den Aufbau der Zelle groß zu verändern oder die Zellstruktur zu zerstören, sodass die Batteriezelle für Sicherheitstests nur marginal von einer gewöhnlich verwendeten Batteriezelle abweicht. Zudem ist erkannt worden, dass durch eine möglichst naturgetreue Nachahmung der Ausbildung eines Kurzschlusses innerhalb einer Batteriezelle besonders aussagekräftige Informationen über das natürliche Zellverhalten von Batteriezellen im Hinblick auf die Erzeugung eines Kurzschlusses erhalten werden können. Mittels diesen Informationen können dann besonders gezielt effektive Maßnahmen zur Erhöhung der Sicherheit von Batteriezellen und Batteriemodulen ergriffen werden.

Die im Rahmen der erfindungsgemäßen Batteriezelle enthaltenen einseitig beschichteten Elektroden besitzen hierbei einen geringeren Widerstand durch die größeren Ableiterquerschnitte und werden daher tendenziell stärker betrieben als die anderen Elektroden. Dies führt bei einer Ausführung der Batteriezelle als Lithium-Ionen-Zelle zum so genannten "Lithium-Plating", bei dem sich metallisches Lithium auf der Anode ablagert, was schließlich zu einem Kurzschluss führt.

Wie bereits ausgeführt, sind die baulichen Änderungen vorzugsweise an der Anode angeordnet, allerdings ist es ebenso vorstellbar, dass die baulichen Veränderungen an der Kathode angeordnet sind. Ebenso können auch mehr als eine erste und zweite einseitig beschichtete Elektrode innerhalb der Batteriezelle angeordnet sein. So könnten beispielsweise neben den vorzugsweise modifizierten Anoden auch einzelne Kathoden modifiziert werden, um eine Beladung zu erhöhen und die Balancierung gegenüber einer benachbarten Anode zu ändern. Auf diese Weise kann die benachbart angeordnete Anode überladen werden und das "Plating" an der Anode gefördert werden, sodass die Wahrscheinlichkeit eines Schadensfalls erhöht wird. Vorteilhaft an einer solchen Ausführung ist insbesondere, dass die Kathode nicht in eine Instabilität geführt wird, welche sie im normalen Betriebsfall nicht annimmt.

Im Rahmen einer konstruktiv einfachen und gleichzeitig effektiven Erzeugung eines Kurschlusses innerhalb einer Batteriezelle kann gegenständlich vorteilhafterweise vorgesehen sein, dass das Initiierungselement in Form eines Deformationselementes zur Deformation der angrenzenden einseitig beschichteten Anoden und/oder Kathoden gebildet ist. Unter einem solchen Deformationselement kann insbesondere ein Element verstanden werden, das die angrenzenden Elektroden zu den entsprechenden Gegenelektroden presst, um an den Grenzflächen zwischen den Elektroden die Stromdichte zu erhöhen und somit das Dendritenwachstum zu fördern. Mit steigendem Ladezustand (SoC) und Lebensdauer weiten sich die Elektroden naturgemäß aus, was somit den Einfluss eines Deformationselementes noch zusätzlich verstärkt. Um die Erzeugung eines Kurzschlusses weiter zu unterstützen, kann erfindungsgemäß insbesondere vorgesehen sein, dass das Initiierungselement seine Form ändert, vorzugsweise sein Volumen vergrößern kann. Das Initiierungselement kann hierbei vorteilhafterweise verschiedene Formen, Größen und Verteilungen aufweisen, um unterschiedlich viele und unterschiedlich große Bereiche für interne Kurzschlüsse zu erzeugen.

Um den konstruktiven Aufwand bei der Einführung des Initiierungselementes zu minimieren, ist es insbesondere denkbar, dass das Initiierungselement lokal innerhalb des Spaltes zur Einführung des Initiierungselementes angeordnet ist. Bei einer derart lokalen Anordnung eines Deformationselementes bliebe innerhalb des Spaltes insbesondere noch genügend Platz zur Aufnahme anderer Elemente, wie für die Aufnahme von Kühlelementen, Sensoren oder Pufferelementen oder dergleichen. Solche Pufferelemente, die das Initiierungselement umgeben, können den Einfluss des Initiierungselementes dabei bspw. gezielt verzögern, indem die Pufferelemente bspw. erst im Laufe der Zeit mit steigender Lebensdauer der Zelle zusammengedrückt werden und der Einfluss des Initiierungselementes im Laufe der Zeit steigt.

Im Hinblick auf eine naturgetreue Nachbildung gealterter Zellen kann gegenständlich ebenso vorgesehen sein, dass das Initiierungselement den Spalt zur Einführung des Initiierungselementes vollständig ausfüllt. Eine derart vollständige Ausfüllung verhindert insbesondere eine schnelle lokale Bildung von Dendriten, die zu einem Kurzschluss zwischen Anode und Kathode führen, sodass die Zellen ein Mindestalter erreichen können.

Hinsichtlich einer möglichst effektiven Deformation einer angrenzenden einseitig beschichteten Anode oder Kathode kann es insbesondere vorteilhaft sein, wenn das Initiierungselement aus einem Metallwerkstoff oder einem Kunststoff gebildet ist, wobei das Initiierungselement vorzugsweise gleich schwer oder schwerer komprimierbar ist, als die Separatorschichten. Zudem kann das Initiierungselement auf diese Weise spannungsstabil gegenüber den Ableitermetallen und dem Elektrolyten ausgebildet sein. Im Rahmen einer besonders schnellen Kurzschluss-Initiierung kann erfindungsgemäß alternativ oder zusätzlich vorgesehen sein, dass in die einseitige Beschichtung der Anode und/oder der Kathode Zusatzelemente zur Verdichtung der Anode oder der Kathode eingeführt werden. So kann die einseitig beschichtete Anode und/oder Kathode bspw. vor der Beschichtung mit Aktivmaterial, beispielsweise mit einem dünnen Metallstück oder dergleichen beklebt werden, um bei der nachfolgenden Beschichtung die Elektrode zu verdichten, sodass das "Lithium-Plating" (bei einer Ausführung der Batteriezelle als Lithium-Ionen-Zelle) vermehrt und stärker einsetzt.

Ebenso ist es im Hinblick auf eine zielgerichtete Initiierung von Kurzschlüssen innerhalb einer Batteriezelle denkbar, dass das Initiierungselement mehrteilig gebildet ist. So kann das Initiierungselement beispielsweise als ein Deformationselement gebildet sein, das einen ersten beispielsweise in Form eines metallischen Sporns gebildeten Teil aufweist und zusätzlich einen zweiten Teil umfasst, der beispielsweise aus Kunststoff gebildet ist und vorzugsweise den restlichen freien Raum um den metallischen Sporn ausfüllt.

Im Rahmen einer zielgerichteten Steuerung aus der Ferne ist es ebenso vorstellbar, dass das Initiierungselement extern ansteuerbar ist, wobei die Ansteuerung vorzugsweise über eine direkte Verkabelung oder per Funk erfolgen kann.

Um die Li-lonen-Konzentration lokal zu erhöhen und dadurch die Bildung eines oder mehrerer Dendriten zu fördern und somit einen Kurzschluss zwischen der Anode und der Kathode einer Zelle zu erzeugen, können erfindungsgemäß verschiedene Ausführungsformen für das Initiierungselement vorgesehen sein. So kann das Initiierungselement als Heizelement und/oder als Verformungselement zur Volumen- oder Formänderung und/oder als Explosionselement und/oder als Speicherelement zur Freisetzung von Material und/oder als Spule zur Erzeugung eines Magnetfelds und/oder als Permanentmagnet und/oder als ferromagnetisches Material gebildet sein. Das freigesetzte Material kann dabei insbesondere in Form von Chemikalien zur Anregung eines Dendritenwachstums gebildet sein.

Ebenfalls Gegenstand der Erfindung ist ein System zur Durchführung eines Sicherheitstestes über die Erzeugung eines Kurzschlusses zwischen einer einseitig beschichteten Anode und/oder Kathode und einer angrenzenden beidseitig beschichteten Anode und/oder Kathode einer Batteriezelle. Hierbei umfasst das erfindungsgemäße System eine voranstehend beschriebene Batteriezelle sowie ein voranstehend beschriebenes Initiierungselement.

Ebenfalls Gegenstand der Erfindung ist ein System zur Durchführung eines Sicherheitstestes über die Erzeugung eines Kurzschlusses zwischen einer einseitig beschichteten Anode und/oder Kathode und einer angrenzenden beidseitig beschichteten Anode und/oder Kathode einer Batteriezelle. Hierbei umfasst das erfindungsgemäße System eine voranstehend beschriebene Batteriezelle sowie ein Steuergerät zur Ansteuerung des Initiierungselementes. Damit weist das erfindungsgemäße System die gleichen Vorteile auf, wie sie bereits ausführlich in Bezug auf die erfindungsgemäße Batteriezelle beschrieben worden sind.

Ebenfalls Gegenstand der Erfindung ist ein Verfahren zur Durchführung eines Sicherheitstestes, insbesondere unter Verwendung einer voranstehend beschriebenen Batteriezelle. Hierbei umfasst das erfindungsgemäße Verfahren die Schritte eines Aussendens eines Steuersignals zur Aktivierung eines Initiierungselementes, das innerhalb eines Spaltes zwischen zwei benachbarten aneinander angrenzenden unbeschichteten Flächen eines Paars aus einseitig beschichteten Anoden und/oder eines Paars aus einseitig beschichteten Kathoden angeordnet ist, eines Empfangens des Steuersignals durch das Initiierungselement sowie eines Aktivierens des Initiierungselementes, um einen elektrischen Kurzschluss zwischen den einseitig beschichteten Anoden und/oder Kathoden und einer angrenzenden beidseitig beschichteten Anode und/oder Kathode herbeizuführen. Damit weist das erfindungsgemäße Verfahren die gleichen Vorteile auf, wie sie bereits ausführlich in Bezug auf die erfindungsgemäße Batteriezelle bzw. das erfindungsgemäße System beschrieben worden sind. Das gegenständliche Verfahren kann hierbei insbesondere dadurch unterstützt werden, dass schnelle zyklische Lade- und Entladezyklen der Batteriezelle durchgeführt werden, die die Bildung eines Kurzschlusses zusätzlich begünstigen. Ebenso kann zusätzlich eine leichte Deformation der Batteriezelle durch externe lokale Belastung um das innerhalb der Zelle angeordnete Initiierungselement vorgesehen sein, um die Bildung eines Kurzschlusses zusätzlich zu begünstigen. Hierbei kann die externe lokale Belastung bspw. auch derart groß sein, dass das Initiierungselement direkt durch die Elektroden getrieben wird, bspw. wie ein interner "Nageltest".

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben

Es zeigen:
- Fig. 1: eine schematische Darstellung einer bekannten Batteriezelle in einer Draufsicht (oben) und einer vergrößerten Darstellung einer Schnittansicht (unten) eines Teils der Batteriezelle,
- Fig. 2: eine schematische Darstellung einer bekannten Batteriezelle in einer Schnittansicht,
- Fig. 3: eine schematische Darstellung einer erfindungsgemäßen Batteriezelle in einer Schnittansicht gemäß einem ersten Ausführungsbeispiel,
- Fig. 4a: eine schematische Darstellung eines Ausschnitts einer erfindungsgemäßen Batteriezelle in einer Schnittansicht gemäß einem ersten Ausführungsbeispiel,
- Fig. 4b: eine schematische Darstellung eines Ausschnitts einer erfindungsgemäßen Batteriezelle in einer Schnittansicht gemäß einem zweiten Ausführungsbeispiel,
- Fig. 5: eine schematische Darstellung der einzelnen Schritte eines erfindungsgemäßen Verfahrens zur Durchführung eines Sicherheitstestes.

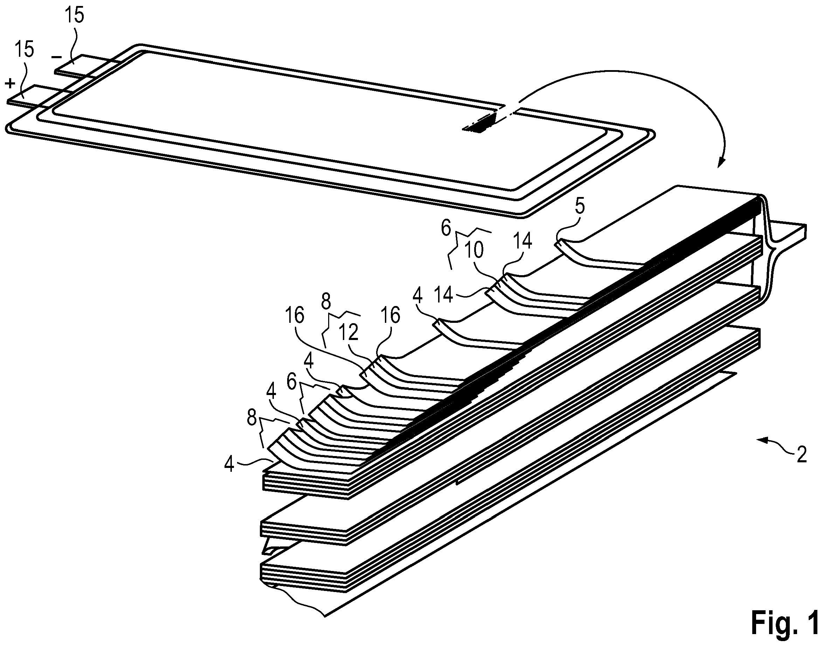

Fig. 1 zeigt eine schematische Darstellung einer bekannten Batteriezelle 2 in einer Draufsicht (oben) und einer vergrößerten Darstellung einer Schnittansicht (unten) eines Teils der Batteriezelle 2.

Die in Fig. 1 dargestellte und in Form einer Pouch-Zelle gebildete Batteriezelle 2 kann bspw. als Lithium-Ionen-Zelle ausgeführt sein und weist - wie vorliegend zu erkennen - eine Mehrzahl von schichtförmig ausgebildeten Anoden 6, eine Mehrzahl von schichtförmig ausgebildeten Kathoden 8 sowie eine Mehrzahl von Separatorschichten 4 zur elektrischen Isolation der Anode 6 und/oder der Kathode 8 auf. Innerhalb der Anoden 6 ist jeweils ein Anodenableiter 10 angeordnet, wohingegen innerhalb der Kathoden 8 ein Kathodenableiter 12 angeordnet ist. Beidseitig jeweils an die Anodenableiter 10 und die Kathodenableiter 12 sind jeweils Schichten 14, 16 aus Anodenaktivmaterial und Kathodenaktivmaterial angeordnet. Außen um die alternierend aufgebaute Mehrschichtstruktur ist ferner eine Zellgehäuseschicht 5 angeordnet, die beispielsweise aus Aluminium gebildet sein kann und dementsprechend nach innen zusätzlich elektrisch isoliert ausgebildet sein kann. Zum Abgreifen der Elektrodenpotentiale der Kathode 8 und der Anode 6 der Batteriezelle 2 sind ferner zwei Anschlussfahnen 15 aus der Batteriezelle 2 herausgeführt, die jeweils mit den Anodenschichten 6 bzw. den Kathodenschichten 8 elektrisch verbunden sind.

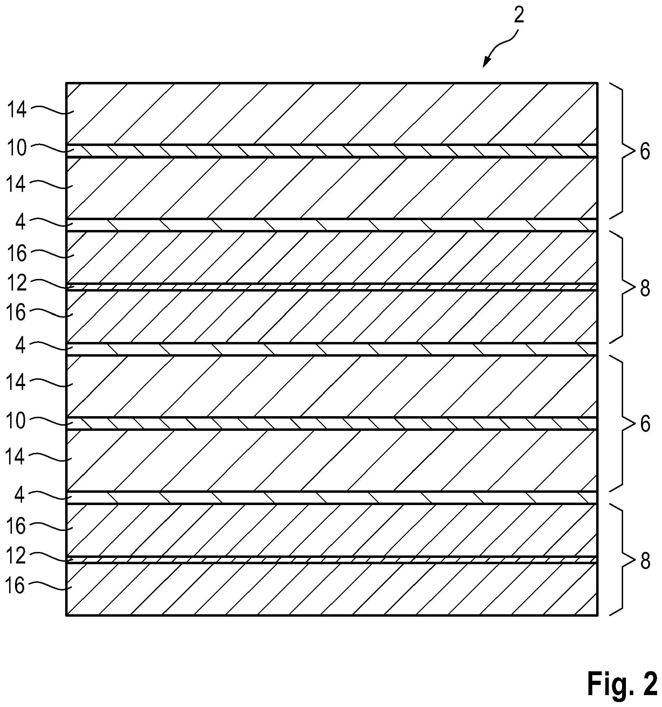

Fig. 2 zeigt eine schematische Teildarstellung einer bekannten Batteriezelle 2 in einer Schnittansicht.

Gemäß dieser Schnittansicht ist insbesondere ein Teil einer alternierend aufgebauten Mehrschichtstruktur aus Anode 6, Separatorschicht 4, Kathode 8 und Separatorschicht 4 zu erkennen. Wie ebenfalls zu erkennen, sind die Anoden 6 jeweils aus einem Anodenableiter 10 aufgebaut, der beidseitig mit einer Schicht 14 aus einem Anodenaktivmaterial beschichtet ist, wohingegen die Kathoden 8 jeweils einen Kathodenableiter 12 aufweisen, der beidseitig mit einer Schicht 16 aus einem Kathodenaktivmaterial beschichtet sind. Es versteht sich, dass die Batteriezelle 2 auch noch - in dieser Ansicht nicht gezeigte - Elemente, wie beispielsweise eine Zellgehäuseschicht 5 oder weitere Anoden 6, Kathoden 8 und Separatorschichten 4 umfassen kann.

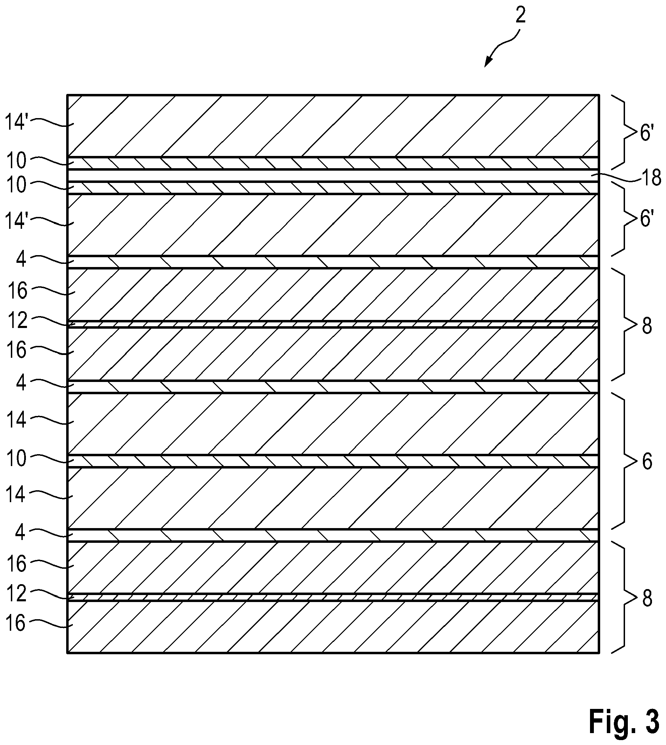

Fig. 3 zeigt eine schematische Darstellung einer erfindungsgemäßen Batteriezelle in einer Schnittansicht gemäß einem ersten Ausführungsbeispiel.

Hierbei umfasst die Batteriezelle 2 eine Mehrzahl von schichtförmig ausgebildeten Anoden 6, eine Mehrzahl von schichtförmig ausgebildeten Kathoden 8 und eine Mehrzahl von Separatorschichten 4 zur elektrischen Isolation der Anoden 6 und der Kathoden 8, wobei die Anoden 6 einen zentral angeordneten Anodenableiter 10 sowie eine beidseitig an den Anodenableiter 10 angeordnete Beschichtung 14 mit Anodenaktivmaterial aufweisen und die Kathoden 8 einen zentral angeordneten Kathodenableiter 12 sowie eine beidseitig an den Kathodenableiter 12 angeordnete Beschichtung 16 mit Kathodenaktivmaterial aufweisen. Zusätzlich zu den beidseitig beschichteten Anoden 6 und Kathoden 8 weist die erfindungsgemäße Batteriezelle 2 vorliegend ein Paar aus einer ersten und zweiten einseitig beschichteten Anode 6' auf, die derart über ihre unbeschichteten Seiten benachbart zueinander angeordnet sind, dass zwischen den benachbarten aneinander angrenzenden unbeschichteten Seiten der Anoden 6' ein Spalt 18 zur Einführung eines Initiierungselementes 20 zur Initiierung eines Kurzschlusses zwischen den einseitig beschichteten Anoden 6' und den angrenzenden beidseitig beschichteten Kathoden 8 gebildet ist. Es versteht sich auch hier, dass die Batteriezelle 2 auch noch - in dieser Ansicht nicht gezeigte - Elemente, wie beispielsweise eine Zellgehäuseschicht 5 oder weitere Anoden 6, 6', Kathoden 8, 8' und Separatorschichten 4 umfassen kann.

Das Anodenableiterelement 10 sowie das Kathodenableiterelement 12 sind gemäß dem vorliegenden Ausführungsbeispiel in Form von Metallplatten gebildet, die im Wesentlichen planparallel zu den an der Anode 6 und der Kathode 8 angrenzenden Separatorschichten 4 angeordnet sind.

Im Hinblick auf eine effiziente Ableitung und Aufnahme von Elektronen sowie eine vorzugsweise kostengünstige Ausführung ist das Anodenableiterelement 10 vorliegend aus einem Kupferwerkstoff und das Kathodenableiterelement 12 aus einem Aluminiumwerkstoff gebildet.

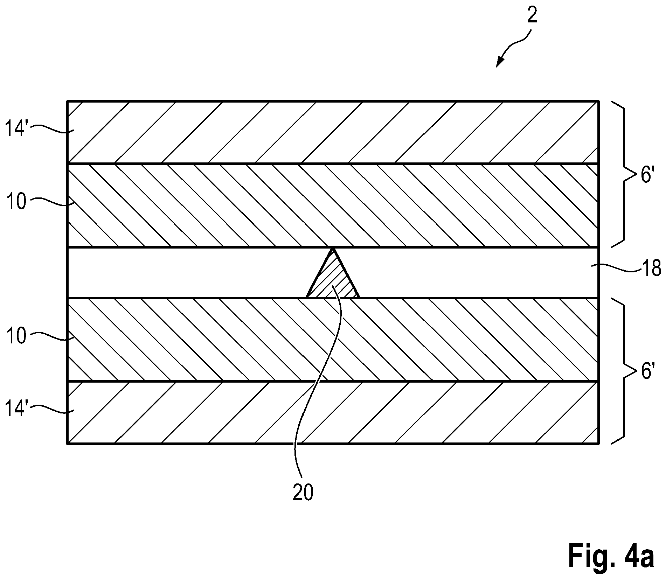

Fig. 4a zeigt eine schematische Darstellung eines Ausschnitts der erfindungsgemäßen Batteriezelle 2 in einer Schnittansicht gemäß einem ersten Ausführungsbeispiel.

Gemäß der Darstellung nach Fig. 4a sind dabei lediglich die beiden gegenüberliegend voneinander angeordneten einseitig beschichteten Anoden 6' dargestellt, die jeweils einen Anodenableiter 10 und eine Schicht 14' aus einem Anodenaktivmaterial ausweisen. Hierbei sind die beiden Anoden 6' derart zueinander angeordnet, dass zwischen den Anoden 6' ein Spalt 18 angeordnet ist, für die Anordnung eines Initiierungselementes 20 zur Initiierung eines Kurzschlusses zwischen den einseitig beschichteten Anoden 6' und einer (vorliegend nicht dargestellten) angrenzenden beidseitig beschichteten Kathode 8.

Das Initiierungselement 20 ist hierbei vorliegend in Form eines Deformationselementes zur Deformation der angrenzenden einseitig beschichteten Anoden 6'gebildet, das die angrenzenden Elektroden 6' zu den entsprechenden Gegenelektroden 8 presst, um an den Grenzflächen zwischen den Elektroden 6', 8 die Stromdichte zu erhöhen und somit das Dendritenwachstum zu fördern. Um die Erzeugung eines Kurzschlusses weiter zu unterstützen kann das Initiierungselement 20 beispielsweise seine Form ändern, vorzugsweise sein Volumen vergrößern. Das Initiierungselement 20 kann dabei beispielsweise verschiedene Formen, Größen und Verteilungen aufweisen, um unterschiedlich viele und unterschiedlich große Bereiche für interne Kurzschlüsse zu erzeugen.

Hinsichtlich einer möglichst effektiven Deformation einer angrenzenden einseitig beschichteten Anode 6' und/oder Kathode 8' kann das Initiierungselement 20 aus einem Metallwerkstoff oder einem Kunststoff gebildet sein, wobei das Initiierungselement 20 vorzugsweise gleich schwer oder schwerer komprimierbar ist, als die Separatorschichten 4.

Im Rahmen einer besonders schnellen Kurzschluss-Initiierung kann zudem alternativ oder zusätzlich vorgesehen sein, dass in die einseitige Beschichtung 14', 16' der Anode 6' und/oder der Kathode 8' Zusatzelemente zur Verdichtung der Anode 6' oder der Kathode 8' eingeführt werden. So kann die einseitig beschichtete Anode 6' und/oder Kathode 8' bspw. vor der Beschichtung mit Aktivmaterial, beispielsweise mit einem dünnen Metallstück oder dergleichen beklebt werden, um bei der nachfolgenden Beschichtung die Elektrode 6', 8' zu verdichten, sodass das "Lithium-Plating" (bei einer Ausführung der Batteriezelle als Lithium-Ionen-Zelle) vermehrt und stärker einsetzt.

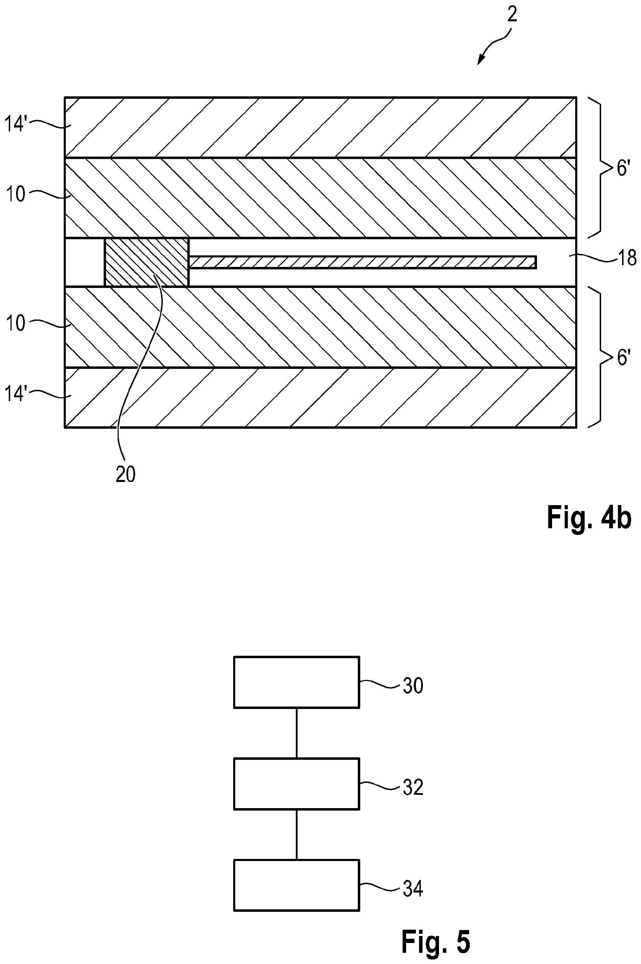

Fig. 4b zeigt eine schematische Darstellung eines Ausschnitts einer erfindungsgemäßen Batteriezelle in einer Schnittansicht gemäß einem zweiten Ausführungsbeispiel.

Gemäß diesem zweiten Ausführungsbeispiel ist das Initiierungelement 20 in Form eines Heizelementes ausgebildet, das wie ein Deformationselement ebenfalls dafür sorgen kann, die Lithium-Ionen-Konzentration lokal zu erhöhen und dadurch die Bildung eines oder mehrerer Dendriten zu fördern, was schließlich einen Kurzschluss zwischen der Anode 6' und der angrenzenden Kathode 8 erzeugt. Neben einem Deformationselement und einem Heizelement kann das Initiierungselement 20 als Explosionselement und/oder als Speicherelement zur Freisetzung von Material und/oder als Spule zur Erzeugung eines Magnetfelds und/oder als Permanentmagnet und/oder als ferromagnetisches Material gebildet sein.

Um den konstruktiven Aufwand bei der Einführung des Initiierungselementes 20 zu minimieren, kann das Initiierungselement wie in Fig. 4a, b dargestellt lediglich lokal innerhalb des Spaltes 18 zur Einführung des Initiierungselementes 20 angeordnet sein.

Ebenso ist es allerdings auch vorstellbar, dass das Initiierungselement 20 den Spalt 18 zur Einführung des Initiierungselementes 20 vollständig ausfüllt.

Zudem kann das Initiierungselement 20 auch mehrteilig gebildet sein und beispielsweise als ein Deformationselement gebildet sein, das einen ersten beispielsweise in Form eines metallischen Sporns gebildeten Teil aufweist und zusätzlich einen zweiten Teil umfasst, der beispielsweise aus Kunststoff gebildet ist und vorzugsweise den restlichen freien Raum um den metallischen Sporn ausfüllt.

Im Rahmen einer zielgerichteten Steuerung aus der Ferne ist es ebenso vorstellbar, dass das Initiierungselement 20 extern ansteuerbar ist, wobei die Ansteuerung vorzugsweise über eine direkte Verkabelung oder per Funk erfolgt.

Fig. 5 zeigt eine schematische Darstellung der einzelnen Schritte eines erfindungsgemäßen Verfahrens zur Durchführung eines Sicherheitstestes, insbesondere unter Verwendung einer erfindungsgemäßen Batteriezelle 2.

Hierbei umfasst das erfindungsgemäße Verfahren die Schritte eines Aussendens 30 eines Schaltsignals zur Aktivierung eines Initiierungselementes 20, das innerhalb eines Spaltes 18 zwischen zwei benachbarten aneinander angrenzenden unbeschichteten Flächen eines Paars aus einseitig beschichteten Anoden 6' und/oder eines Paars aus einseitig beschichteten Kathoden 8' angeordnet ist, eines Empfangens 32 des Steuersignals durch das Initiierungselement 20 sowie eines Aktivierens 34 des Initiierungselementes 20, um einen elektrischen Kurzschluss zwischen den einseitig beschichteten Anoden 6' und/oder Kathoden 8' und einer angrenzenden beidseitig beschichteten Anode 6 und/oder Kathode 8 herbeizuführen.

Mittels der erfindungsgemäßen Batteriezelle 2, des erfindungsgemäßen Systems 1 sowie dem erfindungsgemäßen Verfahren zur Durchführung eines Sicherheitsfestes ist es insbesondere möglich, durch die erfindungsgemäße Ausgestaltung zielgerichtet einen Kurzschluss zwischen der Anode 6 und der Kathode 8 innerhalb einer Batteriezelle 2 zu erzeugen, der aufgrund seiner besonders naturgetreuen Nachahmung eines natürlichen Kurzschlussverhaltens von Batteriezellen besonders aussagekräftige Informationen über das Realkurzschlussverhalten von Batteriezellen liefert. Mittels der auf diese Weise erhaltenen Informationen ist es insbesondere möglich, auf effektive und zielgerichtete Weise Sicherheitsmaßnahmen für den Einsatz von Batteriezellen einführen zu können.

### Bezugszeichenliste

- 1: System zur Durchführung eines Sicherheitstestes
- 2: Batteriezelle zur Durchführung eines Sicherheitstestes
- 4: Separatorschicht
- 5: Zellgehäuseschicht
- 6: beidseitig beschichtete Anode
- 6': einseitig beschichtete Anode
- 8: beidseitig beschichtete Kathode
- 8': einseitig beschichtete Kathode
- 10: Anodenableiter
- 12: Kathodenableiter
- 14: Anodenaktivmaterialbeschichtung einer beidseitig beschichteten Anode
- 14': Anodenaktivmaterialbeschichtung einer einseitig beschichteten Anode
- 15: Anschlussfahne
- 16: Kathodenaktivmaterialbeschichtung einer beidseitig beschichteten Kathode
- 16': Kathodenaktivmaterialbeschichtung einer einseitig beschichteten Kathode
- 18: Spalt
- 20: Initiierungselement

- 30: Aussenden eines Schaltsignals
- 32: Empfangen des Schaltsignals
- 34: Aktivieren des Initiierungselementes

## Patentansprüche

1. Batteriezelle (2) zur Durchführung eines Sicherheitstestes, umfassend:
- eine Mehrzahl von schichtförmig ausgebildeten Anoden (6),
- eine Mehrzahl von schichtförmig ausgebildeten Kathoden (8),
- eine Mehrzahl von Separatorschichten (4) zur elektrischen Isolation der Anoden (6) und der Kathoden (8),
- wobei die Anoden (6) einen zentral angeordneten Anodenableiter (10) sowie eine beidseitig an den Anodenableiter (10) angeordnete Beschichtung (14) mit Anodenaktivmaterial aufweisen,
- wobei die Kathoden (8) einen zentral angeordneten Kathodenableiter (12) sowie eine beidseitig an den Kathodenableiter (12) angeordnete Beschichtung (16) mit Kathodenaktivmaterial aufweisen,
**dadurch gekennzeichnet,**
**dass** zumindest ein Paar aus einer ersten und zweiten einseitig beschichteten Anode (6') und/oder ein Paar aus einer ersten und zweiten einseitig beschichteten Kathode (8') vorgesehen ist, wobei das Paar aus einer ersten und zweiten einseitig beschichteten Anode (6') und/oder das Paar aus einer ersten und zweiten einseitig beschichteten Kathode (8') jeweils derart über ihre unbeschichteten Seiten benachbart zueinander angeordnet sind, dass zwischen den benachbarten aneinander angrenzenden unbeschichteten Seiten der Anode (6') und/oder der Kathode (8') ein Spalt (18) zur Einführung eines Initiierungselementes (20) zur Initiierung eines Kurzschlusses zwischen den einseitig beschichteten Anoden (6') und/oder Kathoden (8') und einer angrenzenden beidseitig beschichteten Anode (6) und/oder Kathode (8) gebildet ist.

2. Batteriezelle (2) nach einem der vorangehenden Ansprüche,
**dadurch gekennzeichnet,**
**dass** das Initiierungselement (20) in Form eines Deformationselementes zur Deformation der angrenzenden einseitig beschichteten Anoden (6') und/oder Kathoden (8') gebildet ist.

3. Batteriezelle (2) nach einem der vorangehenden Ansprüche,
**dadurch gekennzeichnet,**
**dass** das Initiierungselement (20) lokal innerhalb des Spaltes (18) zur Einführung des Initiierungselementes (20) angeordnet ist.

4. Batteriezelle (2) nach einem der vorangehenden Ansprüche,
**dadurch gekennzeichnet,**
**dass** das Initiierungselement (20) den Spalt zur Einführung des Initiierungselementes (20) vollständig ausfüllt.

5. Batteriezelle (2) nach einem der vorangehenden Ansprüche,
**dadurch gekennzeichnet,**
**dass** das Initiierungselement (20) aus einem Metallwerkstoff oder einem Kunststoff gebildet ist, wobei das Initiierungselement gleich schwer oder schwerer komprimierbar ist, als die Separatorschichten (4).

6. Batteriezelle (2) nach einem der vorangehenden Ansprüche,
**dadurch gekennzeichnet,**
**dass** das Initiierungselement (20) mehrteilig gebildet ist.

7. Batteriezelle (2) nach einem der vorangehenden Ansprüche,
**dadurch gekennzeichnet,**
**dass** das Initiierungselement (20) extern ansteuerbar ist, wobei die Ansteuerung über eine direkte Verkabelung oder per Funk erfolgt.

8. Batteriezelle (2) nach einem der vorangehenden Ansprüche,
**dadurch gekennzeichnet,**
**dass** das Initiierungselement (20) als Heizelement und/oder als Verformungselement zur Volumen- oder Formänderung und/oder als Explosionselement und/oder als Speicherelement zur Freisetzung von Material und/oder als Spule zur Erzeugung eines Magnetfelds und/oder als Permanentmagnet und/oder als ferromagnetisches Material gebildet ist.

9. System (1) zur Durchführung eines Sicherheitstestes über die Erzeugung eines Kurzschlusses zwischen einer einseitig beschichteten Anode (6') und/oder Kathode (8') und einer angrenzenden beidseitig beschichteten Anode (6) und/oder Kathode (8) einer Batteriezelle (2), umfassend:
- eine Batteriezelle (2) nach einem der vorangehenden Ansprüche,
- ein Steuergerät (20) zur Ansteuerung des Initiierungselementes (20).

10. Verfahren zur Durchführung eines Sicherheitstestes, insbesondere unter Verwendung einer Batteriezelle (2) nach einem der Ansprüche 1-8, umfassend die Schritte:
- Aussenden (30) eines Steuersignals zur Aktivierung eines Initiierungselementes (20), das innerhalb eines Spaltes (18) zwischen zwei benachbarten aneinander angrenzenden unbeschichteten Flächen eines Paars aus einseitig beschichteten Anoden (6') und/oder eines Paars aus einseitig beschichteten Kathoden (8') angeordnet ist,
- Empfangen (32) des Steuersignals durch das Initiierungselement (20),
- Aktivieren (34) des Initiierungselementes (20), um einen elektrischen Kurzschluss zwischen den einseitig beschichteten Anoden (6') und/oder Kathoden (8') und einer angrenzenden beidseitig beschichteten Anode (6) und/oder Kathode (8) herbeizuführen.

## Claims

1. A battery cell (2) for performing a safety test, comprising:
- a plurality of anodes (6) formed in layers,
- a plurality of cathodes (8) formed in layers,
- a plurality of separator layers (4) for electrically insulating the anodes (6) and the cathodes (8),
- the anodes (6) having a centrally arranged anode collector (10) and a coating (14) comprising anode active material arranged on both sides of the anode collector (10),
- the cathodes (8) having a centrally arranged cathode collector (12) and a coating (16) comprising cathode active material arranged on both sides of the cathode collector (12),
**characterized in that**
at least one pair of a first and second anode (6') coated on one side and/or one pair of a first and second cathode (8') coated on one side is provided, the pair of a first and second anode (6') coated on one side and/or the pair of a first and second cathode (8') coated on one side each being arranged adjacent to one another via their uncoated sides in such a way that, between the adjacent adjoining uncoated sides of the anode (6') and/or the cathode (8'), a gap (18) is formed for the introduction of an initiation element (20) for initiating a short circuit between the anodes (6') and/or cathodes (8') coated on one side and an adjoining anode (6) and/or cathode (8) coated on both sides.

2. The battery cell (2) according to any of the preceding claims,
**characterized in that**
the initiation element (20) is in the form of a deformation element for the deformation of the adjacent anodes (6') and/or cathodes (8') coated on one side.

3. The battery cell (2) according to any of the preceding claims,
**characterized in that**
the initiation element (20) is arranged locally within the gap (18) for the introduction of the initiation element (20).

4. The battery cell (2) according to any of the preceding claims,
**characterized in that**
the initiation element (20) completely fills the gap for the introduction of the initiation element (20).

5. The battery cell (2) according to any of the preceding claims,
**characterized in that**
the initiation element (20) is formed from a metal material or a plastics material, the initiation element being equally difficult or more difficult to compress than the separator layers (4).

6. The battery cell (2) according to any of the preceding claims,
**characterized in that**
the initiation element (20) is formed in multiple parts.

7. The battery cell (2) according to any of the preceding claims,
**characterized in that**
the initiation element (20) is externally actuatable, the actuation being effected via direct cabling or by radio.

8. The battery cell (2) according to any of the preceding claims,
**characterized in that**
the initiation element (20) is formed as a heating element and/or as a deformation element for changing volume or shape and/or as an explosion element and/or as a storage element for releasing material and/or as a coil for generating a magnetic field and/or as a permanent magnet and/or as a ferromagnetic material.

9. A system (1) for performing a safety test via the generation of a short circuit between an anode (6') and/or cathode (8'), which is/are coated on one side, and an adjoining anode (6) and/or cathode (8), which is/are coated on both sides, of a battery cell (2), comprising:
- a battery cell (2) according to any of the preceding claims,
- a control device (20) for actuating the initiation element (20).

10. A method for performing a safety test, in particular using a battery cell (2) according to any of claims 1-8, comprising the steps of:
- emitting (30) a control signal for activating an initiation element (20) which is arranged within a gap (18) between two adjacent adjoining uncoated surfaces of a pair of anodes (6') coated on one side and/or a pair of cathodes (8') coated on one side,
- receiving (32) the control signal by means of the initiation element (20),
- activating (34) the initiation element (20) in order to bring about an electrical short circuit between the anodes (6') and/or cathodes (8') coated on one side and an adjacent anode (6) and/or cathode (8) coated on both sides.

## Revendications

1. Cellule de batterie (2) destinée à la réalisation d'un test de sécurité, comprenant :
- une pluralité d'anodes (6) conçues en forme de couches,
- une pluralité de cathodes (8) conçues en forme de couches,
- une pluralité de couches de séparateur (4) pour l'isolation électrique des anodes (6) et des cathodes (8),
- dans laquelle les anodes (6) présentent un collecteur d'anode (10) agencé de manière centrale ainsi qu'un revêtement (14) agencé des deux côtés sur le collecteur d'anode (10) avec un matériau actif d'anode,
- dans laquelle les cathodes (8) présentent un collecteur de cathode (12) agencé de manière centrale ainsi qu'un revêtement (16) agencé des deux côtés sur le collecteur de cathode (12) avec un matériau actif de cathode,
**caractérisée en ce, qu**'au moins une paire d'une première et d'une seconde anodes (6') revêtues d'un côté et/ou une paire d'une première et d'une seconde cathodes (8') revêtues d'un côté sont prévues, dans laquelle la paire d'une première et d'une seconde anodes (6') revêtues d'un côté et/ou la paire d'une première et d'une seconde cathodes (8') revêtues d'un côté sont agencées respectivement sur leurs côtés non revêtus les unes à côté des autres, de sorte qu'entre les côtés non revêtus attenants adjacents l'un à l'autre de l'anode (6') et/ou de la cathode (8'), une fente (18) pour l'introduction d'un élément d'initiation (20) pour l'initiation d'un court-circuit entre les anodes (6') et/ou les cathodes (8') revêtues d'un côté et une anode (6) et/ou une cathode (8) revêtues des deux côtés attenantes.

2. Cellule de batterie (2) selon l'une quelconque des revendications précédentes,
**caractérisée en ce, que** l'élément d'initiation (20) est réalisé sous la forme d'un élément de déformation pour la déformation des anodes (6') et/ou des cathodes (8') revêtues d'un côté attenantes.

3. Cellule de batterie (2) selon l'une quelconque des revendications précédentes,
**caractérisée en ce, que** l'élément d'initiation (20) est agencé localement à l'intérieur de la fente (18) pour l'introduction de l'élément d'initiation (20).

4. Cellule de batterie (2) selon l'une quelconque des revendications précédentes,
**caractérisée en ce, que** l'élément d'initiation (20) remplit complètement la fente pour l'introduction de l'élément d'initiation (20).

5. Cellule de batterie (2) selon l'une quelconque des revendications précédentes,
**caractérisée en ce, que** l'élément d'initiation (20) est formé à partir d'un matériau métallique ou d'une matière plastique, dans laquelle l'élément d'initiation est aussi difficile ou plus difficile à comprimer que les couches de séparateur (4).

6. Cellule de batterie (2) selon l'une quelconque des revendications précédentes,
**caractérisée en ce, que** l'élément d'initiation (20) est formé en plusieurs pièces.

7. Cellule de batterie (2) selon l'une quelconque des revendications précédentes,
**caractérisée en ce, que** l'élément d'initiation (20) peut être commandé depuis l'extérieur, dans laquelle la commande est effectuée par le biais d'un câblage direct ou par radio.

8. Cellule de batterie (2) selon l'une quelconque des revendications précédentes,
**caractérisée en ce, que** l'élément d'initiation (20) est formé comme un élément chauffant et/ou comme un élément de déformation pour une modification de volume ou de forme et/ou comme un élément d'explosion et/ou comme un élément de stockage pour la libération de matériau et/ou comme une bobine pour la génération d'un champ magnétique et/ou comme un aimant permanent et/ou comme un matériau ferromagnétique.

9. Système (1) pour la réalisation d'un test de sécurité par le biais de la génération d'un court-circuit entre une anode (6') et/ou une cathode (8') revêtues d'un côté et une anode (6) et/ou une cathode (8) revêtues des deux côtés attenantes d'une cellule de batterie (2), comprenant :
- une cellule de batterie (2) selon l'une quelconque des revendications précédentes,
- un appareil de commande (20) pour la commande de l'élément d'initiation (20).

10. Procédé pour la réalisation d'un test de sécurité, en particulier à l'aide d'une cellule de batterie (2) selon l'une des revendications 1 à 8, comprenant les étapes :
- d'envoi (30) d'un signal de commande pour l'activation d'un élément d'initiation (20), qui est agencé à l'intérieur d'une fente (18) entre deux surfaces non revêtues attenantes l'une à l'autre adjacentes d'une paire d'anodes (6') revêtues d'un côté et/ou d'une paire de cathodes (8') revêtues d'un côté,
- de réception (32) du signal de commande par l'élément d'initiation (20),
- d'activation (34) de l'élément d'initiation (20), afin de provoquer un court-circuit électrique entre les anodes (6') et/ou les cathodes (8') revêtues d'un côté et une anode (6) et/ou une cathode (8) revêtues des deux côtés attenantes.
